# EUROPÄISCHE PATENTSCHRIFT

(11) **EP 1 740 427 B1**
(45) Veröffentlichungstag und Bekanntmachung des Hinweises auf die Patenterteilung: **16.09.2009**
(21) Anmeldenummer: 05742800.5
(22) Anmeldetag: 19.04.2005
(51) Int. Cl.: B60T 7/04

(54) **VERFAHREN ZUM BETRIEB EINER BREMSBETÄTIGUNGSEINHEIT EINER KRAFTFAHRZEUGBREMSANLAGE**
PROCESS FOR OPERATING AN ACTUATION UNIT FOR A MOTOR VEHICLE BRAKING SYSTEM
PROCEDE D'EXPLOITATION D'UNE UNITE D'ACTIONNEMENT DU FREIN DU SYSTEME DE FREINAGE D'UN VEHICULE A MOTEUR

(30) Priorität: 20.04.2004 DE 102004019094
(43) Veröffentlichungstag der Anmeldung: 10.01.2007
(73) Patentinhaber: Continental Teves AG & Co. oHG, 60488 Frankfurt am Main (DE)
(72) Erfinder: ALBRICH VON ALBRICHSFELD, Christian, 64283 Darmstadt (DE); BUSCHMANN, Gunther, 65510 dstein (DE); RÜFFER, Manfred, 65843 Sulzbach (DE); KIENLE, Lothar, 68623 Lampertheim (DE)
(74) Vertreter: Dusil, Vladimir
(86) Internationale Anmeldenummer: PCT/EP2005/051717
(87) Internationale Veröffentlichungsnummer: WO 2005/102804

(56) Entgegenhaltungen:
- WO-A-20/05014351
- DE-A1- 10 223 799
- DE-A1- 19 750 977
- US-A- 5 842 534

## Beschreibung

Die Erfindung betrifft ein Verfahren zum Betrieb einer Bremsbetätigungseinheit einer Kraftfahrzeugbremsanlage vom Typ "Brake-by-wire", die aus
a) einem sowohl mittels eines Bremspedals als auch mittels einer elektronischen Steuereinheit fahrerwunschabhängig betätigbaren Bremskraftverstärker, wobei Mittel zur Entkopplung einer kraftübertragenden Verbindung zwischen dem Bremspedal und dem Bremskraftverstärker in der Betriebsart "Brake-by-wire" vorgesehen sind,
b) einem dem Bremskraftverstärker nachgeschalteten Hauptbremszylinder,
c) Mitteln zum Erfassen eines Fahrerverzögerungswunsches, sowie
d) einem mit dem Bremspedal zusammenwirkenden Pedalwegsimulator besteht, durch den in der Betriebsart "Brake-by-wire" eine auf das Bremspedal wirkende Rückstellkraft unabhängig von einer Betätigung des Bremskraftverstärkers simulierbar ist und der in der Betriebsart "Brake-by-wire" bei der Entkopplung der kraftübertragenden Verbindung zwischen dem Bremspedal und dem Bremskraftverstärker zuschaltbar und außerhalb der Betriebsart "Brake-by-wire" abschaltbar ist.

Eine derartige Betätigungseinheit ist aus der internationalen Patentanmeldung WO 2005/014351 bekannt. Bremsbetätigungseinheiten dieser Art sind insbesondere für Bremsanlagen geeignet, die in Kraftfahrzeugen eingesetzt werden, bei denen sog. regenerative Bremsvorgänge durchgeführt werden. Als Beispiele können Fahrzeuge mit Hybrid- oder Elektroantrieb genannt werden, bei denen bestimmte Verzögerungswerte durch den im Generatorbetrieb arbeitenden Elektromotor erreicht werden. Dabei dient der Entkopplung der kraftübertragenden Verbindung zwischen dem Bremspedal und dem Bremskraftverstärker in der Betriebsart "brake-by-wire" der zwischen dem Ende einer mit dem Bremspedal gekoppelten Kolbenstange und dem Steuerkolben des pneumatischen Steuerventils vorgesehene axiale Spalt, der insbesondere bei einem Ausfall der elektromechanischen Betätigung des Steuerventils, bei dem die Betätigungseinheit in der sog. "Rückfallebene" arbeitet, einen am Bremspedal spürbaren Leerweg darstellt. Deswegen ist es sinnvoll, den erwähnten Spalt möglichst klein auszulegen.

Bei einem Einsatz einer derartigen Bremsbetätigungseinheit zur Durchführung der regenerativen Bremsvorgänge erscheint ein größerer Spalt günstiger, da er den Betätigungswegbereich darstellt, in dem der Elektromotor seine Bremswirkung entfaltet. Außerdem werden bei ABS-Bremsungen Pedalgefühlirritationen vermieden. Dieser Wunsch steht jedoch im Widerspruch zu der vorhin genannten Forderung, einen minimalen Spalt zu realisieren.

Es ist daher Aufgabe der vorliegenden Erfindung, ein Verfahren zum Betrieb einer Bremsbetätigungseinheit der eingangs genannten Gattung vorzuschlagen, durch das der konstruktiv festgelegte axiale Spalt bei Fahrzeugen, die regenerative Bremsvorgänge durchführen können, minimiert wird.

Diese Aufgabe wird erfindungsgemäß dadurch gelöst, dass während ein vorbestimmter Betätigungsweg des Bremspedals zurückgelegt wird, bei dem keine Ansteuerung des Bremskraftverstärkers vorgesehen ist, unmittelbar vor dem Eintritt einer kraftübertragenden Verbindung zwischen dem Bremspedal und dem Bremskraftverstärker softwaretechnische Maßnahmen durchgeführt werden, die die kraftübertragende Verbindung zwischen dem Bremspedal und dem Bremskraftverstärker verhindern.

Zur Konkretisierung des Erfindungsgedankens ist vorgesehen, dass der Bremskraftverstärker durch die elektronische Steuereinheit derart angesteuert wird, dass sämtliche Leerwege im Hauptbremszylinder eliminiert werden.

Bei einer anderen vorteilhaften Weiterbildung des vorhin erwähnten Verfahrens wird der Bremskraftverstärker durch die elektronische Steuereinheit derart angesteuert, dass sämtliche Lüftspiele in an den Hauptbremszylinder angeschlossenen Radbremsen eliminiert werden.

Bei einer anderen vorteilhaften Weiterbildung des erfindungsgemäßen Verfahrens wird der Bremskraftverstärker durch die elektronische Steuereinheit derart angesteuert, dass ein definiertes Druckmittelvolumen in Niederdruckspeicher abgelassen wird, die über Auslassventile mit den Radbremsen verbindbar sind.

Ein anderes besonders vorteilhaftes Merkmal des erfindungsgemäßen Verfahrens, das bei einem Kraftfahrzeug durchgeführt wird, das mit einem Antriebselektromotor ausgestattet ist, besteht darin, dass Lüftspiele in einer Achse des Kraftfahrzeuges zugeordneten Radbremsen eliminiert werden, während die Bremsung der anderen Achse durch den Antriebselektromotor erfolgt.

Dabei ist es besonders sinnvoll, wenn die softwaretechnischen Maßnahmen durchgeführt werden, wenn ein zwischen einer mit dem Bremspedal gekoppelten Kolbenstange und einem Steuerkolben eines pneumatischen Steuerventils des Bremskraftverstärkers vorgesehener axialer Spalt einen vorbestimmten Mindestwert unterschreitet.

Der Mindestwert wird vorzugsweise aus dem Betätigungsweg der Kolbenstange und dem bei der Ansteuerung des Bremskraftverstärkers von dessen den Hauptbremszylinder betätigendem Ausgangsglied zurück gelegten Weg ermittelt.

Außerdem können die softwaretechnischen Maßnahmen in Abhängigkeit von der Betätigungsgeschwindigkeit der Kolbenstange durchgeführt werden.

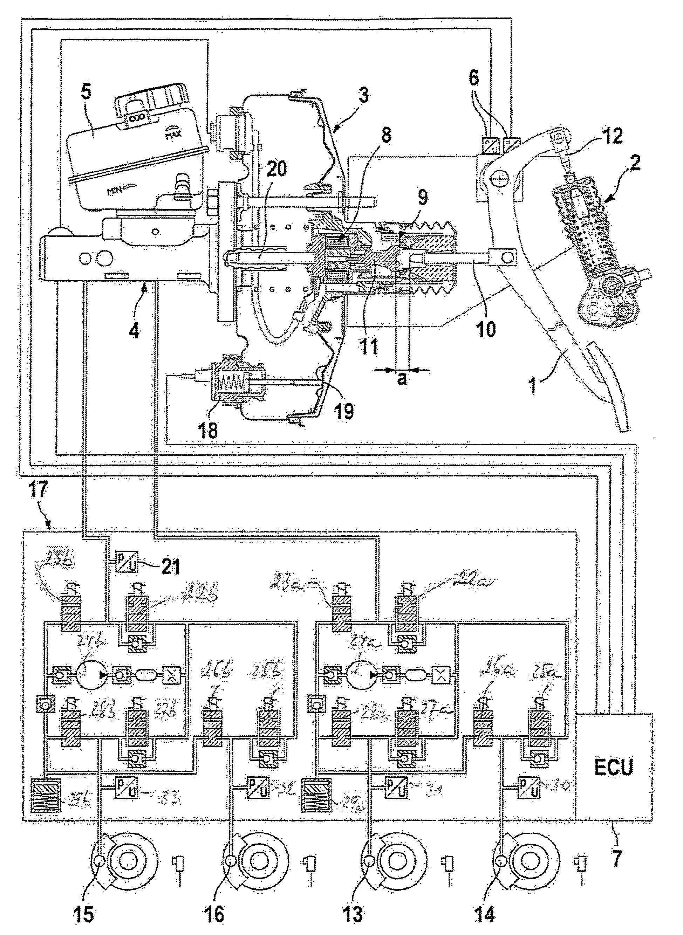

Weitere Merkmale und Vorteile der Erfindung werden in der nachfolgenden Beschreibung unter Bezugnahme auf die beiliegende Zeichnung näher erläutert, deren einzige Figur eine schematische Darstellung eines Bremssystems zeigt, bei dem das erfindungsgemäße Verfahren verwendet werden kann.

Das in der Zeichnung gezeigte Bremssystem zur Betätigung einer Kraftfahrzeugbremsanlage vom Typ "Brake-by-wire" besteht im Wesentlichen aus einem Bremskraftverstärker, vorzugsweise einem Unterdruckbremskraftverstärker 3, einem dem Bremskraftverstärker 3 nachgeschalteten Hauptbremszylinder, vorzugsweise einem Tandemhauptzylinder 4, an dessen nicht dargestellte Druckräume unter Zwischenschaltung einer hydraulischen Regeleinheit 17 Radbremsen 13, 14, 15, 16 eines Kraftfahrzeugs angeschlossen sind, einem dem Hauptbremszylinder 4 zugeordneten Druckmittelvorratsbehälter 5, einem Bremspedal 1 zur Betätigung des Bremskraftverstärkers 3 durch den Fahrer, einem mit dem Bremspedal 1 insbesondere in der Betriebsart "Brake-by-wire" zusammenwirkenden Pedalwegsimulator 2, der dem Fahrer das gewöhnliche Bremspedalgefühl vermittelt, mindestens einer Sensoreinrichtung 6 zur Erfassung eines Fahrerverzögerungswunsches bzw. des Betätigungsweges des Bremspedals 1, sowie einer elektronischen Steuereinheit 7, durch deren Ausgangssignale u. a. ein dem Bremskraftverstärker 3 zugeordneter Elektromagnet 8 ansteuerbar ist, der eine vom Fahrerwillen unabhängige Betätigung eines pneumatischen Steuerventils 9 ermöglicht, das eine Luftzufuhr zum Bremskraftverstärker 3 steuert. Wie in der nachfolgenden Beschreibung ausführlich erläutert wird, enthält die elektronische Steuereinheit 7 eine Regelschaltung zur Regelung einer charakteristischen Größe des Bremskraftverstärkers 3, vorzugsweise des vom Ausgangsglied 20 des Bremskraftverstärkers 3 zurück gelegten Weges und/oder zur Regelung des im System herrschenden hydraulischen Druckes.

Ein zwischen dem Ende einer mit dem Bremspedal 1 gekoppelten Kolbenstange 10 und einem Steuerkolben 11 des vorhin genannten Steuerventils 9 vorgesehener axialer Spalt "a" gewährleistet eine Entkopplung der kraftübertragenden Verbindung zwischen dem Bremspedal 1 und dem Bremskraftverstärker 3 in der Betriebsart "Brake-by-wire". Ein Wegsensor 18 dient der Erfassung des Weges einer die Verstärkungskraft des Bremskraftverstärkers 3 aufbringenden beweglichen Wand 19 bzw. des Weges des oben erwähnten Ausgangsglieds 20 des Bremskraftverstärkers 3, das seine Ausgangskraft auf einen nicht dargestellten ersten Kolben des Hauptbremszylinders 4 überträgt. Außerdem ist in der hydraulischen Regeleinheit 17 ein Drucksensor 21 integriert, der den im System herrschenden hydraulischen Eingangsdruck erfasst.

Der Pedalwegsimulator 2, durch den, wie bereits erwähnt, in der Betriebsart "Brake-by-wire" eine auf das Bremspedal wirkende Rückstellkraft unabhängig von einer Betätigung des Bremskraftverstärkers 3 simulierbar ist, ist derart ausgeführt, dass er in der Betriebsart "Brake-by-wire" bei der Entkopplung der kraftübertragenden Verbindung zwischen dem Bremspedal 1 und dem Bremskraftverstärker 3 zuschaltbar und außerhalb der Betriebsart "Brake-by-wire" abschaltbar ist. Die Betätigung des Pedalwegsimulators 2 erfolgt mittels eines am Bremspedal 1 angelenkten Betätigungsgliedes 12.

Außerdem ist der Zeichnung zu entnehmen, dass die hydraulische Steuer- und Regeleinheit (HCU) 17 sämtliche hydraulischen sowie elektrohydraulischen Komponenten aufweist, die zur Durchführung von Bremsdruckregelvorgängen erforderlich sind. Dazu gehören pro Bremskreis: jeweils ein Trennventil 22a, b, ein elektrisches Umschaltventil 23a, b, eine hydraulische Rückförderpumpe 24a, b, jeweils zwei elektrisch ansteuerbare Druckregelventile bzw. Einlass- und Auslassventile 25a, b, 26a, b, 27a, b und 28a, b zur selektiven Einstellung des Bremsdruckes an den Radbremsen 13 - 16, jeweils ein Niederdruckspeicher 29a, b sowie den Radbremsen 13 - 16 zugeordnete Drucksensoren 30 - 33.

Wie bereit erwähnt wurde, dient das erfindungsgemäße Verfahren dem möglichst optimalen Dimensionieren bzw. Minimieren des axialen Spaltes "a" insbesondere bei der Durchführung von regenerativen Bremsungen, bei denen ein Teil der Bremswirkung von dem im Generatorbetrieb arbeitenden Elektromotor bereit gestellt wird. Bei derartigen Teilbremsungen ist es erwünscht, dass ein langer Betätigungsweg des Bremspedals 1 zugelassen wird, ohne dass der Bremskraftverstärker 3 angesteuert wird bzw. ohne dass eine Verzögerung des Fahrzeugs durch die hydraulisch betätigbaren Reibungsbremsen stattfindet. So kann der axiale Spalt "a" lediglich für die Abdeckung einer geringen Verzögerung, z. B., 0,1 g ausgelegt werden. Wird dieser Spalt nun während einer Bremsung nahezu überwunden, so wird unmittelbar vor dem Eintritt einer Kraftübertragung zwischen der Kolbenstange 10 und dem Steuerkolben 11 des Steuerventils 9 der Elektromagnet 8 derart angesteuert, dass durch das Vorfahren der beweglichen Wand 19 des Bremskraftverstärkers 3 bzw. seines Ausgangsgliedes 20 die beiden Kolben des Hauptbremszylinders 4 so weit verschoben werden, dass im Hauptbremszylinder 4 vorhandene Leerwege, beispielsweise die Schließwege von vorhandenen Zentralventilen, eliminiert werden. Dieses Vorfahren führt zu einer Vergrößerung des Spaltes "a", bei der jedoch kein Druckaufbau in den Radbremsen 13 - 16 statt findet. Wird durch eine stärkere Betätigung des Bremspedals 1 der Spalt nun wieder fast überwunden, so werden durch eine verstärkte Ansteuerung des Bremskraftverstärkers 3 die Lüftspiele der Radbremsen 13 - 16 eliminiert, was wiederum zu einer weiteren Vergrößerung des Spaltes "a" führt, bei der der Druck in den Radbremsen 13 - 16 nur vernachlässigbar steigt. Wird dann der Spalt "a" durch eine noch stärkere Betätigung des Bremspedals 1 wieder fast überwunden, wobei die gewünschte Verzögerung immer noch "regenerativ" aufgebracht werden kann, so wird der Bremskraftverstärker 3 in einem letzten Schritt noch weiter betätigt, wobei ein Druckaufbau in den Radbremsen 13 - 16 durch Ablassen des Druckmittels in die vorhin genannten Niederdruckspeicher 29a, b verhindert wird.

Im Rahmen der vorliegenden Erfindung sind selbstverständlich auch weitere Modifikationen denkbar. So können die softwaretechnischen Maßnahmen zusätzlich in Abhängigkeit vom Fahrzustand oder von der vom Antriebsstrang zur Verfügung gestellten möglichen Verzögerung durchgeführt werden.

## Patentansprüche

1. Verfahren zum Betrieb einer Bremsbetätigungseinheit Kraftfahrzeugbremsanlage vom Typ "Brake-by-wire", die aus
a) einem sowohl mittels eines Bremspedals als auch mittels einer elektronischen Steuereinheit fahrerwunschabhängig betätigbaren Bremskraftverstärker, wobei Mittel zur Entkopplung einer kraftübertragenden Verbindung zwischen dem Bremspedal und dem Bremskraftverstärker in der Betriebsart "Brake-by-wire" vorgesehen sind,
b) einem dem Bremskraftverstärker nachgeschalteten Hauptbremszylinder,
c) Mitteln zum Erfassen eines Fahrerverzögerungswunsches, sowie
d) einem mit dem Bremspedal zusammenwirkenden Pedalwegsimulator besteht, durch den in der Betriebsart "Brake-by-wire" eine auf das Bremspedal wirkende Rückstellkraft unabhängig von einer Betätigung des Bremskraftverstärkers simulierbar ist und der in der Betriebsart "Brake-by-wire" bei der Entkopplung der kraftübertragenden Verbindung zwischen dem Bremspedal und dem Bremskraftverstärker zuschaltbar und außerhalb der Betriebsart "Brake-by-wire" abschaltbar ist,
**dadurch gekennzeichnet, dass** während ein vorbestimmter Betätigungsweg des Bremspedals (1) zurückgelegt wird, bei dem keine Ansteuerung des Bremskraftverstärkers (3) vorgesehen ist, unmittelbar vor dem Eintritt einer kraftübertragenden Verbindung zwischen dem Bremspedal (1) und dem Bremskraftverstärker (3) softwaretechnische Maßnahmen durchgeführt werden, die die kraftübertragende Verbindung zwischen dem Bremspedal (1) und dem Bremskraftverstärker (3) verhindern.

2. Verfahren nach Anspruch 1, **dadurch gekennzeichnet, dass** der Bremskraftverstärker (3) durch die elektronische Steuereinheit (7) derart angesteuert wird, dass sämtliche Leerwege im Hauptbremszylinder (4) eliminiert werden.

3. Verfahren nach Anspruch 2, **dadurch gekennzeichnet, dass** der Bremskraftverstärker (4) durch die elektronische Steuereinheit (7) derart angesteuert wird, dass sämtliche Lüftspiele in an den Hauptbremszylinder (4) angeschlossenen Radbremsen (13 - 16) eliminiert werden.

4. Verfahren nach Anspruch 2 oder 3, **dadurch gekennzeichnet, dass** der Bremskraftverstärker (3) durch die elektronische Steuereinheit (7) derart angesteuert wird, dass ein definiertes Druckmittelvolumen in Niederdruckspeicher (29a, b) abgelassen wird, die über Auslassventile (26a, b; 28a, b) mit den Radbremsen (13 - 16) verbindbar sind.

5. Verfahren nach Anspruch 2, das bei einem Kraftfahrzeug durchgeführt wird, das mit einem Antriebselektromotor ausgestattet ist, **dadurch gekennzeichnet, dass** Lüftspiele in einer Achse des Kraftfahrzeuges zugeordneten Radbremsen eliminiert werden, während die Bremsung der anderen Achse durch den Antriebselektromotor erfolgt.

6. Verfahren nach einem der vorher gehenden Ansprüche **dadurch gekennzeichnet, dass** die softwaretechnischen Maßnahmen durchgeführt werden, wenn ein zwischen einer mit dem Bremspedal (1) gekoppelten Kolbenstange (10) und einem Steuerkolben (11) eines pneumatischen Steuerventils (9) des Bremskraftverstärkers (3) vorgesehener axialer Spalt (a) einen vorbestimmten Mindestwert unterschreitet.

7. Verfahren nach Anspruch 6 **dadurch gekennzeichnet, dass** der Mindestwert aus dem Betätigungsweg der Kolbenstange (10) und dem bei der Ansteuerung des Bremskraftverstärkers (3) von dessen den Hauptbremszylinder (4) betätigendem Ausgangsglied (20) zurück gelegten Weg ermittelt wird.

8. Verfahren nach Anspruch 6 oder 7 **dadurch gekennzeichnet, dass** die softwaretechnischen Maßnahmen in Abhängigkeit von der Betätigungsgeschwindigkeit der Kolbenstange (10) durchgeführt werden.

## Claims

1. Method for operating a brake actuation unit of a motor-vehicle brake system of the "brake-by-wire" type which comprises
a) a brake booster which can be actuated by means of a brake pedal and also by means of an electronic control unit as a function of a driver request, means being provided for decoupling a force-transmitting connection between the brake pedal and the brake booster in the "brake-by-wire" operating mode,
b) a brake master cylinder which is connected behind the brake booster,
c) means for detecting a driver retardation request, and
d) a pedal-travel simulator which interacts with the brake pedal, and by which simulator, in the "brake-by-wire" operating mode, a restoring force which acts on the brake pedal can be simulated independently of an actuation of the brake booster, and which simulator can be switched on in the "brake-by-wire" operating mode during the decoupling of the force-transmitting connection between the brake pedal and the brake booster and can be switched off outside the "brake-by-wire" operating mode, **characterized in that,** while a predefined actuating travel of the brake pedal (1) is covered, in which no actuation of the brake booster (3) is provided, software measures are carried out immediately before the start of a force-transmitting connection between the brake pedal (1) and the brake booster (3), which software measures prevent the force-transmitting connection between the brake pedal (1) and the brake booster (3).

2. Method according to Claim 1, **characterized in that** the brake booster (3) is actuated by the electronic control unit (7) in such a way that all the idle travels in the brake master cylinder (4) are eliminated.

3. Method according to Claim 2, **characterized in that** the brake booster (4) is actuated by the electronic control unit (7) in such a way that all the air plays in the wheel brakes (13-16) which are connected to the brake master cylinder (4) are eliminated.

4. Method according to Claim 2 or 3, **characterized in that** the brake booster (3) is actuated by the electronic control unit (7) in such a way that a defined pressure-medium volume is released into low-pressure accumulators (29a, b) which can be connected to the wheel brakes (13-16) via outlet valves (26a, b; 28a, b).

5. Method according to Claim 2 which is carried out in a motor vehicle which is equipped with an electric drive motor, **characterized in that** air plays in wheel brakes which are assigned to one axle of the motor vehicle are eliminated, while the other axle is braked by the electric drive motor.

6. Method according to one of the preceding claims, **characterized in that** the software measures are carried out if an axial gap (a) which is provided between a piston rod (10) which is coupled to the brake pedal (1) and a control piston (11) of a pneumatic control valve (9) of the brake booster (3) undershoots a predefined minimum value.

7. Method according to Claim 6, **characterized in that** the minimum value is determined from the actuating travel of the piston rod (10) and the travel which is covered during the actuation of the brake booster (3) by its output element (20) which actuates the brake master cylinder (4).

8. Method according to Claim 6 or 7, **characterized in that** the software measures are carried out as a function of the actuating speed of the piston rod (10).

## Revendications

1. Procédé pour faire fonctionner une unité d'actionnement de frein d'une installation de frein de véhicule automobile du type à freinage câblé "Brake-by-wire" qui se compose
a) d'un dispositif amplificateur de force de freinage pouvant être actionné au moyen d'une pédale de frein ainsi qu'au moyen d'une unité de commande électronique en fonction d'un souhait du conducteur, des moyens pour désaccoupler une connexion de transfert de force entre la pédale de frein et le dispositif amplificateur de force de freinage du type à freinage câblé "Brake-by-wire" étant prévus,
b) d'un cylindre de freinage principal monté en aval du dispositif amplificateur de force de freinage,
c) de moyens pour détecter un souhait de ralentissement du conducteur ainsi que
d) d'un simulateur de course de pédale coopérant avec la pédale de frein, qui permet de simuler, dans le mode de fonctionnement du type "Brake-by-wire", une force de rappel agissant sur la pédale de frein indépendamment d'un actionnement du dispositif amplificateur de force de freinage et qui peut être commuté lors du désaccouplement de la connexion de transfert de force entre la pédale de frein et le dispositif amplificateur de force de freinage et qui peut être déconnecté en dehors du mode de fonctionnement du type "Brake-by-wire",
**caractérisé en ce que** pendant qu'une course d'actionnement prédéterminée de la pédale de frein (1) est parcourue, durant laquelle aucune commande du dispositif amplificateur de force de freinage (3) n'est prévue, juste avant l'entrée d'une connexion de transfert de force entre la pédale de frein (1) et le dispositif amplificateur de force de freinage (3), on effectue des mesures techniques logicielles qui empêchent la connexion de transfert de force entre la pédale de frein (1) et le dispositif amplificateur de force de freinage (3).

2. Procédé selon la revendication 1, **caractérisé en ce que** le dispositif amplificateur de force de freinage (3) est commandé par l'unité de commande électronique (7) de telle sorte que toutes les courses à vide dans le cylindre de frein principal (4) soient éliminées.

3. Procédé selon la revendication 2, **caractérisé en ce que** le dispositif amplificateur de force de freinage (3) est commandé par l'unité de commande électronique (7) de telle sorte que tous les jeux dans des freins de roue (13 - 16) raccordés au cylindre de frein principal (4) soient éliminés.

4. Procédé selon la revendication 2 ou 3, **caractérisé en ce que** le dispositif amplificateur de force de freinage (3) est commandé par l'unité de commande électronique (7) de telle sorte qu'un volume de fluide sous pression défini soit déchargé dans des accumulateurs basse pression (29a, b) qui peuvent être connectés par le biais de soupapes de sortie (26a, b ; 28a, b) aux freins de roue (13 - 16).

5. Procédé selon la revendication 2, qui est mis en oeuvre dans un véhicule automobile qui est équipé d'un moteur électrique d'entraînement, **caractérisé en ce que** les jeux dans des freins de roue associés à un essieu du véhicule automobile sont éliminés, tandis que le freinage de l'autre essieu est effectué par le moteur électrique d'entraînement.

6. Procédé selon l'une quelconque des revendications précédentes, **caractérisé en ce que** les mesures techniques logicielles sont mises en oeuvre lorsqu'une fente axiale (a) prévue entre une tige de piston (10) accouplée à la pédale de frein (1) et un piston de commande (11) d'une soupape de commande pneumatique (9) du dispositif amplificateur de force de freinage (3) est inférieure à une valeur minimale prédéterminée.

7. Procédé selon la revendication 6, **caractérisé en ce que** la valeur minimale est déterminée à partir de la course d'actionnement de la tige de piston (10) et de la course parcourue lors de la commande du dispositif amplificateur de force de freinage (3) par son organe de sortie (20) actionnant le cylindre de frein principal (4).

8. Procédé selon la revendication 6 ou 7, **caractérisé en ce que** les mesures techniques logicielles sont mises en oeuvre en fonction de la vitesse d'actionnement de la tige de piston (10).
